# EUROPEAN PATENT APPLICATION

(11) **EP 4 484 384 A1**
(43) Date of publication of application: **01.01.2025**
(21) Application number: 24184718.5
(22) Date of filing: 26.06.2024
(51) Int. Cl.: C02F 9/00, C22B 3/22, C22B 3/42, C22B 3/44, C22B 7/00, C22B 26/12, H01M 10/54, B01D 61/44, C02F 1/28, C02F 1/42, C02F 1/44, C02F 1/469, C02F 1/52, C02F 1/66, C02F 1/72, C02F 103/16

(54) **METHOD OF RECOVERING ACID AND ALKALI FROM RAFFINATE GENERATED FROM METAL EXTRACTION PROCESS**

(30) Priority: 29.06.2023 KR 20230084368
(71) Applicant: SK Innovation Co., Ltd., Seoul 03188 (KR)
(72) Inventor: LA, Yeon Hwa, 34124 Daejeon (KR); MOON, Yong Geal, 34124 Daejeon (KR); LEE, Tea Young, 34124 Daejeon (KR)
(74) Representative: Prüfer & Partner mbB Patentanwälte · Rechtsanwälte

(57) **Abstract**

Proposed is a method of recovering acids and alkalis from raffinate generated from a metal extraction process. The method includes pretreating raffinate generated from a metal extraction process and electrodialyzing the pretreated raffinate. The method recovers some components present in raffinate generated from a battery manufacturing process and a battery treatment process to reuse the recovered components. Therefore, the method provides economic and environmental benefits.

## Description

### CROSS REFERENCE TO RELATED APPLICATION

### BACKGROUND OF THE DISCLOSURE

### 1. Field of the Disclosure

The present disclosure relates to a method of recovering acids and alkali from raffinate generated from a metal extraction process.

### 2. Description of the Related Art

In recent years, as environmental problems caused by excessive use of fossil fuels have become a global issue, there has been a growing need for transportation that uses alternative, more environmentally friendly fuels; one of the fastest growing forms of transportation is electric vehicles that use electric energy.

Electric vehicles are equipped with batteries for powering the vehicles, which have a short lifespan of a few years to a maximum of about 10 years because the capacity of the batteries decreases with use.

The rapid adoption of electric vehicles is increasing the amount of wastewater generated globally from the manufacturing process of batteries used in the electric vehicles, as well as the amount of wastewater generated from used batteries.

### [Documents of Related Art]

### Patent Document

(Patent Document 1) Korean Patent No. 10-2361906

### SUMMARY OF THE DISCLOSURE

The present disclosure provides a method of recovering acids and alkalis from raffinate generated from a metal extraction process.

In one aspect of the present disclosure, a method of recovering acids and alkalis from raffinate generated from a metal extraction process may include: pretreating raffinate generated from a metal extraction process; and electrodialyzing the pretreated raffinate.

According to one embodiment of the present disclosure, the raffinate may contain sodium and sulfur.

According to one embodiment of the present disclosure, the raffinate may contain 1% to 25% by weight of sodium and sulfur.

According to one embodiment of the present disclosure, the raffinate may have a pH level in a range of 1 to 8, preferably in a range from 2 to 7, more preferably in a range from 4 to 6.

According to one embodiment of the present disclosure, the pretreating may include flocculation/sedimentation, adsorption, ion exchange, oxidation, or combinations thereof.

According to one embodiment of the present disclosure the pretreating involves flocculation/sedimentation involving the steps: adding chemicals or eluting metal ions from the electrodes of used batteries, to form hydroxides of the metal ions; and coagulating and flocculating the contaminants through coagulation-flocculation reactions between the hydroxides with the contaminants present in wastewater.

According to one embodiment of the present disclosure, the electrodialyzing may be performed with a bipolar membrane, a cationic membrane, an anionic membrane, or any combination thereof. A bipolar membrane is preferred.

According to one embodiment of the present disclosure, the electrodialyzing may be performed at a temperature in a range of 15°C to 55°C preferably in a range from 20°C to 50°C, more preferably in a range from 30°C to 40°C.

According to one embodiment of the present disclosure, the method may further include subjecting the raffinate to an electrochemical-advanced oxidation process.

According to one embodiment of the present disclosure, the method may further include microfiltering the pretreated raffinate.

According to a further aspect, the present disclosure provides a process of recovering metals from used batteries containing lithium, obtaining a raffinate, and further recovering acids and alkalis from the obtained raffinate, the process comprising:
(a) performing a metal extraction process for recovering metals from used batteries containing lithium besides the metals, including the steps of
   physically separating components of used batteries into cathode materials, cathode/anode powders, and plastics;
   reducing the recovered cathode powder using hydrogen or carbon, and Na₂CO₃;
   washing the reduced powder; recovering lithium from the reduced powder;
   collecting the residue containing the metals to be recovered;
   optionally subj ecting the residue to a wet extraction process to separately recover individual metals to be recovered, and
   obtaining the raffinate generated from the metal extraction process, the raffinate containing acids and salts; and
(b) performing a method for recovering acids and alkalis from raffinate according to the above aspect of the present disclosure.

According to one embodiment of the present disclosure, acid-based extractants or organic acid-based extractants are used in the wet extraction process.

According to one embodiment of the present disclosure, the raffinate contains sulfide salts, in particular salts including sodium and sulfur.

According to one embodiment of the present disclosure, the cathode materials comprise copper and/or aluminum.

According to one embodiment of the present disclosure, the used battery is an NCM battery, wherein in the extraction step, Mn is first recovered at a low pH level, preferably at a pH in a range of 3 to 5, Co is then recovered by raising the pH level, preferably to a pH range of 4 to 6, and finally Ni is recovered, which is performed using a phosphate-based extractant or an organic acid-based extractant.

The features and advantages of the present disclosure can be more clearly understood with reference to the following detailed description and the accompanying drawings.

Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe his or her invention in the best way possible.

According to one aspect of the disclosure, there are economic and environmental benefits because acids and alkalis are recovered for reuse from metal extraction raffinates generated in a process of recovering metals from used batteries.

### BRIEF DESCRIPTION OF THE DRAWINGS

FIG. 1 is a process flow diagram according to one embodiment of the present invention;
FIG. 2 is a schematic diagram of an electrodialysis reaction using a bipolar membrane, according to one embodiment of the present invention; and
FIG. 3 is a schematic diagram of an electrodialysis reaction using a cationic membrane and an anionic membrane, according to one embodiment of the present invention.

### DESCRIPTION OF THE PREFERRED EMBODIMENTS

The above and other objectives, features, and advantages of the present disclosure will be more clearly understood from the following detailed description taken in conjunction with the accompanying drawings, but the present disclosure is not limited thereto.

Hereinafter, the preferred embodiment of the present disclosure will be described in detail with reference to the accompanying drawings.

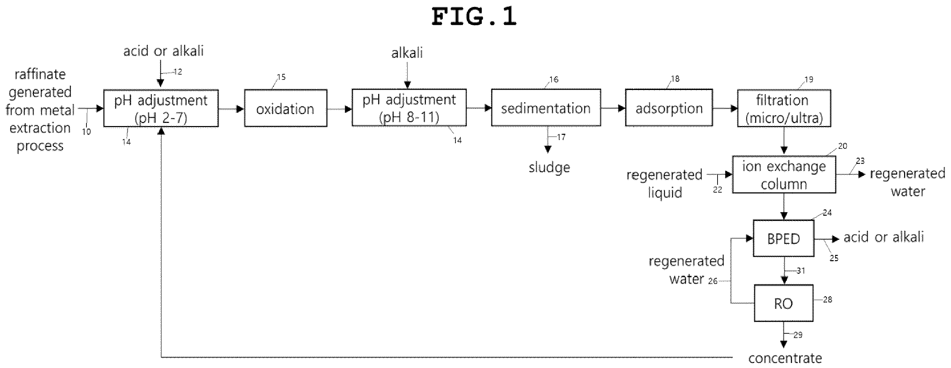

FIG. 1 is a flow diagram according to one embodiment.

A method of recovering acids and alkalis from raffinate generated from a metal extraction process includes: pretreating a raffinate generated from a metal extraction process; and electrodialyzing the pretreated raffinate. As used herein, the term "raffinate generated from a metal extraction process" refers to wastewater generated from a process for recovering reusable metals from used batteries, in which the raffinate may be derived from a process for recovering valuable metals, such as nickel, cobalt, manganese, or combinations thereof, from used lithium batteries. As used herein, the term "acids" may include phosphoric acid-based substances or organic acid-based substances such as sulfuric acid, and the term "alkalis" may include salts, especially sulfide salts, which acids and salts are respectively generated due to their use in the extraction processes and thus are accumulated in the raffinate

According to one embodiment of the present disclosure, the raffinate may contain sodium and sulfur. The raffinate may include, for example, wastewater derived from a process of recovering reusable metals from used batteries, using chemicals including sodium and sulfur. Thus, the raffinate may contain sodium sulfate as well as an extractant, a diluent, and metal ions.

The processes of recovering valuable metals from used batteries, which generate raffinate to be processed according to one embodiment of the present disclosure, are processes of recovering valuable metals from Li(Ni, Co, Mn)O₂ (NCM) used batteries. The processes may include: discharging used batteries; physically separating the components of the used batteries into cathode materials such as copper and aluminum, cathode/anode powders, and plastics; reducing the recovered black powder (cathode active material component) using hydrogen or carbon, and Na₂CO_{3,}, typically at a suitable elevated or high temperature, preferably at 300 to 600 °C; washing the reduced powder; and recovering lithium from the reduced powder. The residue contains nickel, cobalt, and manganese. The residue may undergo a wet extraction process to separately recover nickel, cobalt, and manganese. In the process, phosphoric acid-based extractants or organic acid-based extractants are used, and the extraction process can generate raffinate containing large amounts of salts, especially sulfide salts.

The recovery process from used batteries entrains an extraction raffinate that may contain hazardous components, or may be strongly acidic and high in salt content, thereby causing water pollution if the extraction raffinate was discharged without being properly treated. Since the extraction raffinate contains large amounts of sodium and sulfur, the extraction raffinate can be a feed for the method of the present disclosure. Waste battery recovery processes similar to those for NCM batteries are also performed for LiCoO₂ (LCO) batteries, Li(Ni,Co,Al)O₂ (NCA) batteries, and LiMn₂O₄ (LMO) batteries, resulting in the production of an extraction raffinate containing sodium and sulfur. The extraction raffinates generated from the recovery processes from these batteries can be a feed for the method of the present disclosure.

In one embodiment of the present disclosure, the raffinate from a metal extraction process may contain sodium and sulfur in a total amount of 1 to 25 wt%. When the total content of sodium and sulfur in the raffinate is less than 1 wt%, the low electrical conductivity of the raffinate may reduce the efficiency of subsequent electrodialysis, whereas when the total content of sodium and sulfur content is greater than 25 wt%, sodium sulfate crystallization may occur, causing clogging of the membranes used in electrodialysis.

In one embodiment of the present disclosure, the raffinate may have a pH level of 1 to 8. The process of recovering metals from used batteries is a process of extracting specific metals by changing the pH level of a solution. For example, when the used battery is an NCM battery, Mn is first recovered at a low pH level, preferably at a pH in a range of 3 to 5, Co is then recovered by raising the pH level, preferably to a pH in a range of 4 to 6, and finally Ni is recovered, which is performed using a phosphate-based extractant or an organic acid-based extractant. When a phosphate-based extractant is used as an extractant for Ni extraction, the pH level of the extraction raffinate remaining after the Ni recovery can be about 4 to 8. When organic acid-based extractant is used as an extractant, since organic acids are highly soluble in water, an additional step of reducing the pH level is performed to recover the dissolved organic acids contained in the solution. The pH level of the raffinate remaining after the additional step may be in a range of 1 to 4.

According to one embodiment of the present disclosure, the process for recovering acids and alkalis from the raffinate generated from a metal extraction process may include the step of pretreating the raffinate. The pretreatment step corresponds to purifying the raffinate so that the raffinate has a condition suitable for electrodialysis.

In one embodiment of the present disclosure, the pretreatment step(s) may include one or more of, or all of, flocculation/sedimentation, adsorption, ion exchange, oxidation, or any combination thereof. In one embodiment of the present disclosure, for instance, the pretreatment steps include pretreatment of the extraction raffinate by flocculation/sedimentation, oxidation, and ion exchange.

The flocculation/sedimentation is a process of separating substances such as extractants, total phosphorus (TP), salts, heavy metals, and non-degradable organics present in the raffinate by increasing the size of the substances to be separated, in which the size increase is performed by electroflocculation or by the addition of chemicals so that the substances can be easily settle down. More specifically, the flocculation step may involve: adding chemicals such as alum or eluting metal ions such as Fe ions from the electrodes of used batteries, to form hydroxides of the metal ions; and coagulating and flocculating the contaminants through coagulation-flocculation reactions between the hydroxides with the contaminants present in wastewater. Here, flocs refer to aggregates or agglomerates of the substances such as total phosphorus, salts, heavy metals, and non-degradable organics present in the raffinate, in which the aggregates or agglomerates are formed by electroflocculation, and treated liquid refers to a liquid phase remaining after the flocs are removed from the raffinate.

The sedimentation performed after the flocculation is a stage in which the flocks of harmful substances are separated and removed from the raffinate by the density difference between the liquid and the harmful substances in the raffinate. In one embodiment, the sedimentation may be performed by using any known means for separating the flocs from the raffinate to produce the treated liquid. For example, the sedimentation may be performed by using any known means, such as sedimentation beds and skimmers. After the sedimentation, the flocs separated from the treated water may be discarded or additionally treated. The treated liquid may be introduced into a subsequent step.

The adsorption is a process of removing the diluent present in the raffinate by adsorption by an adsorbent. The adsorption is not particularly limited in method, and any method that can separate the treated liquid and the diluent from the raffinate. For example, the adsorption may be performed by filtration using a filter containing an adsorbent. The type of adsorbent is also not limited as long as it can adsorb the diluent. For example, activated carbon may be used as the adsorbent.

The ion exchange corresponds to a process of separating polyvalent metal ions remaining in the treated liquid. In the ion exchange step, the polyvalent metal ions in the treated liquid are precipitated and separated in the form of salts by the addition of an ion exchange solution. The ion exchange can be performed using ion exchange membranes.

The oxidation may be carried out using chemicals. For example, the oxidation may be performed by Fenton oxidation which involves a catalytic reaction of the raffinate with hydrogen peroxide to produce hydroxyl radicals (OH radicals) or by ozone oxidation which involves the injection of ozone. In addition, any process that oxidizes and removes harmful substances through an oxidation reaction can be used without limitation.

The method of recovering acids and alkalis from the raffinate generated from a metal extraction process, includes the step of electrodialyzing the pretreated raffinate. The electrodialysis is a process for removing ionic components or salts, such as Na₂SO₄ present in the pretreated raffinate. The electrodialysis is performed by applying a voltage between two electrodes to dissociate water contained in the pretreated raffinate into H+ and OH- which will bind with the ionic components or salts so that the ionic components or salts can be recovered in acid and alkali forms. The apparatus used in the electrodialysis step is not limited, provided that it is capable of recovering acids and alkalis from the pretreated raffinate.

In one embodiment of the present disclosure, the electrodialysis of the pretreated raffinate may be performed with the use of a bipolar membrane, a cationic membrane, an anionic membrane, or any combination thereof. A cationic membrane is a membrane with a polymer layer that only allows cations to pass through, an anionic membrane is a membrane with a polymer layer that only allows anions to pass through, and a bipolar membrane is a membrane with two polymer layers one of which allows cations to pass through and the other of which allows anions to pass through. Preferably, the electrodialysis may be performed using a bipolar membrane.

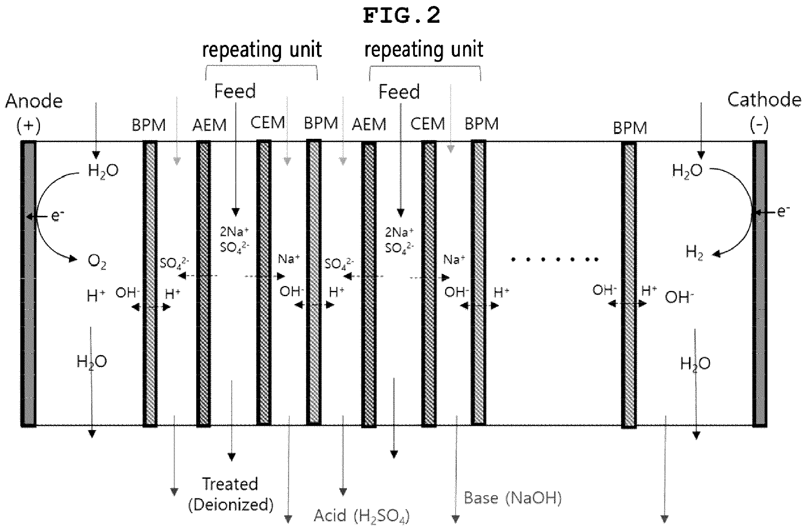

FIG. 2 illustrates a schematic diagram of an electrodialysis step using a bipolar membrane. After water decomposes into H+ and OH- ions at the interface between the cation-transmitting polymer layer and the anion-transmitting polymer layer of the bipolar membrane, the OH- ions combine with Na+ ions produced by the decomposition of Na₂SO₄ to produce NaOH, which is an alkali, and the H+ ions combine with SO₄²- ions produced by the decomposition of Na₂SO₄ to produce H₂SO₄, which is an acid. While conventional membranes are characterized by the selectivity of the substances that can pass through the membranes, bipolar membranes are characterized by the fact that the electrolysis reaction of water occurs at the interface between the cation-transmitting polymer layer and the anion-transmitting polymer layer, rather than at the surface of an electrode. Because of this, bipolar membranes have the advantage of enabling electrodialysis with electrodes at respective ends of a membrane stack, rather than having to install electrodes between each of the membranes in a membrane stack. In addition, since the bipolar membranes can operate at relatively low voltages, device design costs and device operation costs are reduced.

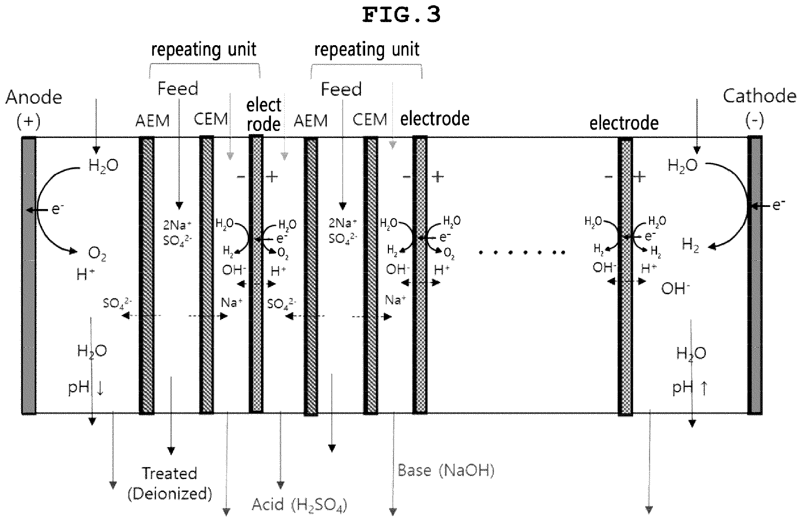

FIG. 3 illustrates a schematic diagram of an electrodialysis step using a cationic membrane and an anionic membrane. Unlike the electrolysis using a bipolar membrane, electrodialysis using cationic and anionic membranes requires that electrodes are installed not only at the two ends of the membrane stack but also inside the membrane stack, and a voltage must be applied to electrolyze water. However, the concentrations of acids and alkalis produced by electrodialysis using cationic and anionic membranes are higher compared to the case where electrodialysis is performed with a bipolar membrane.

According to one embodiment of the present disclosure, the electrodialysis may be performed at a temperature in a range of 15°C to 55°C. Na₂SO₄ contained in raffinate generated from a metal extraction process is crystallized after other harmful substances typically contained in the raffinate are removed by flocculation, filtration, and/or further pretreatment processes, and then crystallized Na₂SO₄ is used as a chemical in other processes. However, the crystallization of Na₂SO₄ requires a large amount of hot water, which is not efficient in terms of energy consumption. However, according to one embodiment of the present disclosure, Na₂SO₄ contained in the pretreated raffinate of a metal extraction process is recovered through electrodialysis, in particular with a bipolar membrane. That is, NaOH, which can be used for saponification of a wet extractant, and Na₂SO₄, which is a wet extractant, are recovered. The electrodialysis is performed at a temperature in a range of 15°C to 55°C, which is significantly lower than the crystallization temperature of Na₂SO₄. Therefore, the method of the present disclosure is advantageous in terms of energy consumption compared to the conventional Na₂SO₄ crystallization process. The electrodialysis step is preferably carried out at a temperature of 20°C to 50°C and more preferably at a temperature of 30°C to 40°C.

According to one embodiment of the present disclosure, the method of recovering acids and alkalis from the raffinate generated from a metal extraction process may further include the step of introducing the electrodialyzed raffinate into reverse osmosis. The electrodialyzed raffinate still contains low concentrations of salts, and the reverse osmosis treatment can separate pure water from the electrodialyzed raffinate through a reverse osmosis membrane. The pure water that is separated is referred to as "regenerated water" which is recirculated back into an electrodialysis unit. The raffinate remaining after the separation of the pure water contains salts and is referred to as "concentrate". The concentrate is transported back to the pretreatment stage and used as a feed for acid and alkali recovery.

According to one embodiment of the present disclosure, the method of recovering acids and alkalis from the raffinate generated from a metal extraction process may further include an electrochemical-advanced oxidation process. The electrochemical-advanced oxidation process may be performed before or after the pretreatment process. The electrochemical-advanced oxidation is a process that generates hydroxyl radicals (OH radicals) through electrolysis of water on the surface of an electrode, and utilizes the high reactivity of the hydroxyl radicals to oxidize and remove harmful substances present in wastewater. Any type of electrochemical-advanced oxidation process that oxidizes and removes harmful substances through an oxidation reaction using electrical energy can be used without any limitation. For example, the electrochemical-advanced oxidation may include the generation of hydroxyl radicals through oxidation of ozone or hydrogen peroxide, and the generation of hydroxyl radicals through ultraviolet irradiation of water.

According to one embodiment of the present disclosure, the method of recovering acids and alkalis from the raffinate generated from a metal extraction process may further include the step of purifying the pretreated raffinate. The purification step corresponds to a process for removing microscopic harmful substances remaining in the pretreated raffinate, which have not been removed through the pretreatment step. The purification step is not particularly limited in method, provided that the removal of residual contaminants is possible. According to one embodiment of the present disclosure, the purification step may preferably be carried out by microfiltration or ultrafiltration. The purification step can be performed before or after the pretreatment step, and can be performed once or multiple times.

Hereinafter, the preferred examples are presented to aid understanding of the present disclosure. However, the following examples are provided only to facilitate easier understanding of the present disclosure, and the present disclosure is not limited thereto.

### Example

### Example 1: Pretreatment for electrodialysis of raffinate generated from a metal extraction process

An extraction raffinate generated from a waste battery recovery process has characteristics shown in Table 1 below. The extraction raffinate is pretreated by flocculation/sedimentation, oxidation, and ion exchange for the removal of impurities. The extent of removal of total organic carbon (TOC), total phosphorus (TP), and metal in the raffinate pretreated by any combination of the above-mentioned techniques is shown in Table 2 below.

**[Table 1]**

| Characteristics of raffinate generated from a process of extracting metals from used batteries | | |
|---|---|---|
| Component | Value | Unit |
| Na₂SO₄ | 15-25 | wt% |
| P | 5-20 | mg/L |
| Other metals | 100 or more | mg/kg |
| TOC | 70-500 | mg/L |

**[Table 2]**

| Technology | Conditions | Removal of TOC | Removal of TP | Removal of metal ions |
|---|---|---|---|---|
| Flocculation/sedimentation | Flocculant 800 ppm, Adjuvant 10 ppm, @pH > 10 | 10% or less | 30-40% | Ni>98.8% |
| Fenton oxidation/precipitation | H₂O₂ 1200 ppm, Fe 348 ppm, @pH 10 by Ca(OH)₂ | 63.4% | 32.2% | Ni>89.4% |
| Ozone oxidation/precipitation | 0.32 g/min, 50 min @pH 12 by Ca(OH)₂ | 50% | 46.6% | Ni>89.4% |
| Adsorption by activated carbon | LHSV 0.02 ml/min, @pH 7 | 63-68% | 10% or less | 10% or less |
| Ion exchange | Feeding rate 6.6 ml/min | 5% or less | 5% or less | Mg 97%, Ni 86.7% |

As shown in Table 2, the raffinates pretreated by each technique of flocculation/sedimentation, Fenton oxidation/sedimentation, ozone oxidation/sedimentation, activated carbon adsorption, and ion exchange showed a reduction in TOC, TP, and metal ion content.

Polyvalent metal ions can form metal hydroxides on the membrane during electrodialysis, thereby causing fouling of the membrane. The pretreatment reduces the content of metal ions, thereby reducing the probability of fouling.

In addition, the metal extractant present in the raffinate is a hydrophobic oil, which can form a hydrophobic film on the membrane surface in the subsequent electrodialysis step, thereby impeding the movement of the ions. The reduced amounts of TOC and TP in Table 2 indicate that the content of the metal extractant present in the raffinate was reduced.

As described above, the pretreatment of the raffinate has the advantage of removing components that negatively affect membrane performance and lifespan in the subsequent electrodialysis step, thereby preventing membrane degradation and enabling long-term operation of the electrodialysis unit.

Herein above, the present disclosure has been described in detail with reference to specific embodiments. Embodiments are intended to illustrate the present disclosure in detail, and the present disclosure is not limited thereto. It will be apparent to those skilled in the art that modifications thereto or improvements thereof are possible within the technical spirit of the present disclosure.

All simple modifications and alterations of the present disclosure fall within the scope of the present disclosure, and the specific protection scope of the present disclosure will be clearly defined by the appended claims.

## Claims

1. A method of recovering acids and alkalis from raffinate generated from a metal extraction process, the method comprising:
pretreating raffinate of a metal extraction process; and
electrodialyzing the pretreated raffinate.

2. The method according to claim 1, wherein the raffinate contains sodium and sulfur.

3. The method according to claim 1 or 2, wherein the raffinate contains sodium and sulfur in a total amount of 1 to 25 wt%.

4. The method according to any one of claims 1 to 3, wherein the raffinate may have a pH level of 1 to 8.

5. The method according to any one of the previous claims, wherein the pretreating involves flocculation/sedimentation, adsorption, ion exchange, oxidation, or a combination thereof.

6. The method according to claim 5, wherein the pretreating involves flocculation/sedimentation involving the steps: adding chemicals or eluting metal ions from the electrodes of used batteries, to form hydroxides of the metal ions; and coagulating and flocculating the contaminants through coagulation-flocculation reactions between the hydroxides with the contaminants present in wastewater.

7. The method according to any one of the previous claims, wherein the electrodialyzing is performed with a bipolar membrane, a cationic membrane, an anionic membrane, or any combination thereof, preferably with a bipolar membrane.

8. The method according to any one of the previous claims, wherein the electrodialyzing is performed at a temperature in the range of 15°C to 55°C, preferably in a temperature range from 20°C to 50°C, more preferably in a temperature range from 30°C to 40°C.

9. The method of according to any one of the previous claims, further comprising: performing electrochemical-advanced oxidation on the raffinate.

10. The method according to any one of the previous claims, further comprising one or more steps of the group consisting of : Microfiltering or ultrafiltration the pretreated raffinate, and/or reverse osmosis of the electrodialyzed raffinate, preferably further comprising microfiltering the pretreated raffinate.

11. A process of recovering metals from used batteries containing lithium, obtaining a raffinate, and further recovering acids and alkalis from the obtained raffinate, the process comprising:
(a) performing a metal extraction process for recovering metals from used batteries containing lithium besides the metals, including the steps of
physically separating components of used batteries into cathode materials, cathode/anode powders, and plastics;
reducing the recovered cathode powder using hydrogen or carbon, and Na₂CO₃;
washing the reduced powder; recovering lithium from the reduced powder;
collecting the residue containing the metals to be recovered;
optionally subj ecting the residue to a wet extraction process to separately recover individual metals to be recovered, and
obtaining the raffinate generated from the metal extraction process, the raffinate containing acids and salts; and
(b) performing a method for recovering acids and alkalis from raffinate according to any one of claims 1 to 10.

12. The method according to claim 11, wherein acid-based extractants or organic acid-based extractants are used in the wet extraction process.

13. The method according to claim 11 or 12, wherein the raffinate contains sulfide salts, in particular salts including sodium and sulfur.

14. The method according to any one of claims 11 to 13, wherein the cathode materials comprise copper and/or aluminum.

15. The method according to any one of claims 11 to 14, wherein the used battery is one selected from the group consisting of a Li(Ni, Co, Mn)O₂ (NCM) battery comprising nickel, cobalt, and manganese to be revered, a LiCoO₂ (LCO) battery comprising cobalt to be revered, a Li(Ni,Co,Al)O₂ (NCA) battery comprising nickel, cobalt and aluminum to be recovered, and a LiMn₂O₄ (LMO) battery comprising manganese to be recovered,
preferably wherein the used battery is a a Li(Ni, Co, Mn)O₂ (NCM) battery wherein, in the extraction step, Mn is first recovered at a low pH level, preferably at a pH in a range of 3 to 5, Co is then recovered by raising the pH level, preferably to a pH in a range of 4 to 6, and finally Ni is recovered, which is performed using a phosphate-based extractant or an organic acid-based extractant.
